# EUROPEAN PATENT SPECIFICATION

(11) **EP 4 126 596 B1**
(45) Date of publication and mention of the grant of the patent: **29.10.2025**
(21) Application number: 21714988.9
(22) Date of filing: 29.03.2021
(51) Int. Cl.: B60R 7/04, B60N 2/24, B60N 2/015, B60N 2/01

(54) **A DRIVER'S CABIN OF A VEHICLE**
FAHRERKABINE EINES FAHRZEUGS
CABINE DE CONDUCTEUR D'UN VÉHICULE

(30) Priority: 30.03.2020 NL 2025232
(43) Date of publication of application: 08.02.2023
(73) Proprietor: DAF Trucks N.V., 5643 TW Eindhoven (NL)
(72) Inventor: ROESTENBURG, Adam, 5643 TW Eindhoven (NL); PURDY, Stuart William, 5643 TW Eindhoven (NL)
(74) Representative: V.O.
(86) International application number: PCT/NL2021/050202
(87) International publication number: WO 2021/201674

(56) References cited:
- EP-A2- 1 338 463
- JP-A- H0 725 287
- US-A1- 2008 164 712

## Description

The invention relates to a driver's cabin of a vehicle, in particular a heavy goods vehicle, according to the preamble of claim 1. Such a driver's cabin is for example known from JPH0725287A. Furthermore, another driver's cabin is known from US2008/164712A1.

Vehicles, in particular heavy goods vehicles, with such driver's cabins are commonly known. The vast majority of long distance transports in heavy goods vehicle is performed with a single driver, and usually the co-driver chair is not used. As the driver's cabin of the heavy goods vehicle is used for driving, living and sleeping the available interior room is scarce, and to enlarge the available interior room it would in a number of cases be beneficial to use a driver's cabin with a single chair. However, a truck equipped with a single chair is commercially not attractive as this configuration is e.g. not appreciated by buyers of second hand heavy goods vehicles. Also the absence of a co-driver chair is less attractive as in some incidental cases a co-driver is joining the driver. A removable co-driver chair would on the one hand - when installed - allow for a co-driver to join the driver and on the other hand - when removed - to use the additional cabin room for other purposes. However, a removable co-driver chair is not desired due to the mass of the chair in combination of the relatively high floor of the cabin of a heavy goods vehicle, which makes removing and installing a co-driver chair rather cumbersome.

There is thus a need in the field to provide a driver's cabin of a vehicle, in particular a heavy goods vehicle, comprising a co-driver chair and in which the available interior space in the driver's cabin is sufficient.

According to the invention this object can be obtained by providing a driver's cabin of a vehicle in accordance with claim 1.

By forming the co-driver chair support as a U-shaped portal like structure a passage is provided below the co-driver chair so that it is possible to provide access from the front of the co-driver chair to the back thereof. Additionally, a U-shaped portal like structure - unlike conventional box like chair supports - consumes relatively little space. The U-shaped portal like co-driver chair support can for example also provide storage space under the seat of the co-driver chair. In addition, the co-driver chair support with the base plate mounted to the cabin floor provides sufficient strength to withstand various static and dynamic loads from all directions, in particular provides sufficient strength during loads exerted on the co-driver chair during crashes. In a particularly advantageous embodiment of a driver's cabin of a vehicle according to the invention it is then preferred to attach the seat belt plug buckle to the side support plates of the co-driver chair support, such that the seat belt plug buckle is secured sufficiently safe to the co-driver chair support to provide additional safety during crashes.

In an embodiment of a driver's cabin of a vehicle according to the invention the co-driver chair support further comprises two vertically extending strengthening beams, in particular with a rectangular cross-section, each vertically extending strengthening beam connected to the base plate and to one of the side support plate members. The two vertically extending strengthening beams connected to the base plate and to the side support plate members provide additional strength to the co-driver chair support.

In a further embodiment of a driver's cabin of a vehicle according to the invention a side support plate member comprises a front edge and a rear edge, as seen in a normal driving direction of the vehicle, and wherein at least one of the front edge of the base plate, the rear edge of the base plate, the front edge of the side support plate members and the rear edge of the side support plate members comprises a strengthening rim. The strengthening rims provide further strength to the co-driver chair support.

In another embodiment of a driver's cabin of a vehicle according to the invention the cabin floor is provided with a front reinforcement member and a rear reinforcement member, the reinforcement members extending transverse to the normal driving direction of the vehicle, wherein the base plate comprises two front base plate mounting holes near its front edge and four rear base plate mounting holes near its rear edge, wherein the base plate is mounted to the front reinforcement member by front fastening means extending through the front base plate mounting holes and to the rear reinforcement member by rear fastening means extending through the rear base plate mounting holes. In this manner sufficient strength is provided to the co-driver chair support so that in a particular embodiment of the invention a co-driver chair assembly can be used having a center of gravity which is positioned in front of a center line of the co-driver chair support, when seen in a normal driving direction of the vehicle. Preferably, the cabin floor comprises longitudinal girders and wherein the front and rear reinforcement members are welded to the longitudinal girders.

In a still further embodiment of a driver's cabin of a vehicle according to the invention the driver chair is connected in a displaceable manner to the cabin floor from a front position to a rear position, wherein the co-driver chair is fixedly connected to the cabin floor in a single position which is in line with the rear position of the driver chair, when seen in a direction transverse to the normal driving direction of the vehicle. By fixedly positioning the co-driver chair in a rear position the space in front of the co-driver chair is e.g. available for storing items. In a particular embodiment of a driver's cabin of a vehicle according to the invention in which the driver's cabin is provided with a co-driver side door having a transparent lower portion, positioning the co-driver chair in a rear position allows the driver free sight through the transparent lower portion of the co-driver side door providing additional safety.

In a particularly advantageous embodiment of a driver's cabin of a vehicle according to the invention the chair assembly of the co-driver chair is composed of a seat and a backrest which are connected to each other by assembly plates, the seat being hingeable connected to the assembly plates around a first hinge from a horizontal seating position into a vertical raised position, and vice versa, wherein the free ends of the side support plate members comprise side support plate mounting holes and the assembly plates comprises corresponding assembly plate mounting holes, the chair assembly being attached to the co-driver chair support by means of chair assembly fastening means extending through the side support plate mounting holes and the corresponding assembly plate mounting holes, and wherein the hinge is arranged above the assembly plate mounting holes in a front part of the assembly plates. By connecting the seat hingeable to the assembly plates hinging the co-driver seat in the vertical raised position not only provides a better line of sight for the driver through a transparent lower portion of a co-driver side door but in addition provides additional space in the interior of the driver's cabin. Further, since the hinge is arranged above the assembly plate mounting holes in a front part of the assembly plates, i.e. in a high and forward position, seating comfort can be provided whilst maintaining structural integrity to the co-driver chair.

In still another embodiment of a driver's cabin of a vehicle according to the invention the backrest of the chair assembly comprises a backrest base portion facing the seat and a backrest upper part adjoining the backrest base portion, the backrest upper part being pivotally attached to the backrest base portion about a horizontally aligned pivot axis for pivoting the backrest upper part in a horizontal position over the seat. In this manner the backrest upper part in its horizontal position can e.g. provide the function as a table, which e.g. can be used by the driver while resting. In particular the table can be reached via a bed-platform extending behind the co-driver chair transverse to the normal driving direction of the vehicle and can be used to place personal belongings while resting or sleeping. It is then advantageous when the backrest upper part is provided with an electrical socket, so that electrical equipment can be connected to the electrical socket while being placed on the table. Additionally, in case the driver's cabin comprises a co-driver side having a rear quarter window when positioning the backrest upper part in the horizontal position direct view of the driver via the rear quarter window is improved, thereby improving safety. Preferably, the backrest upper part is connected to the backrest base portion by means of a parallelogram mechanism. By means of a parallelogram mechanism the upper surface of the backrest upper part when the backrest upper part is positioned in horizontal position maintains a horizontal position irrespective of the angular position of the backrest base portion, which is in particular advantageous in the embodiment of a driver's cabin according to the invention in which the backrest is connected in a hingeable manner to the assembly plates around a second hinge, the second hinge being positioned above the first hinge.

In another embodiment of a driver's cabin of a vehicle according to the invention the driver's cabin comprises a bed platform extending behind the co-driver chair transverse to the normal driving direction of the vehicle and a drawer or box storage underneath the bed platform, the drawer or box storage being accessible through the side support plate members of the co-driver chair support. In this manner the driver can access the drawer or box storage underneath the bed platform from the interior of the cabin. In known heavy goods vehicles the storage spaces behind the chairs can only be reached externally or by turning the bed platform upwards which is not very practical.

The invention will be further explained with reference to the Figures, in which a non-limiting exemplary embodiment of according to the invention is shown:
Fig. 1 schematically shows a front view of an embodiment of a driver's cabin of a vehicle according to the invention with a driver chair and a co-driver chair;
Fig. 2 schematically shows a side view of another embodiment of a driver's cabin of a vehicle according to the invention with a co-driver chair with a hingeable seat and a backrest having a backrest base portion and a backrest upper portion hingeably attached to the backrest base portion;
Fig. 3 schematically shows a side view of the embodiment shown in Figure 2, in which the backrest upper portion is arranged in a horizontal position;
Fig. 4 schematically shows an embodiment of a co-driver chair support in a driver's cabin of a vehicle according to the invention in a perspective view from above;
Fig. 5 schematically shows the embodiment of a co-driver chair support in a driver's cabin of a vehicle according to the invention as shown in Figure 4 in a perspective side view from below the cabin floor;
Fig. 6 schematically shows the embodiment of a co-driver chair support in a driver's cabin of a vehicle according to the invention as shown in Figure 4 mounted with a chair assembly in a perspective front view;
Fig. 7 schematically shows the embodiment of a co-driver chair support in a driver's cabin of a vehicle according to the invention as shown in Figure 6 mounted with a chair assembly in a perspective view from below the cabin floor;

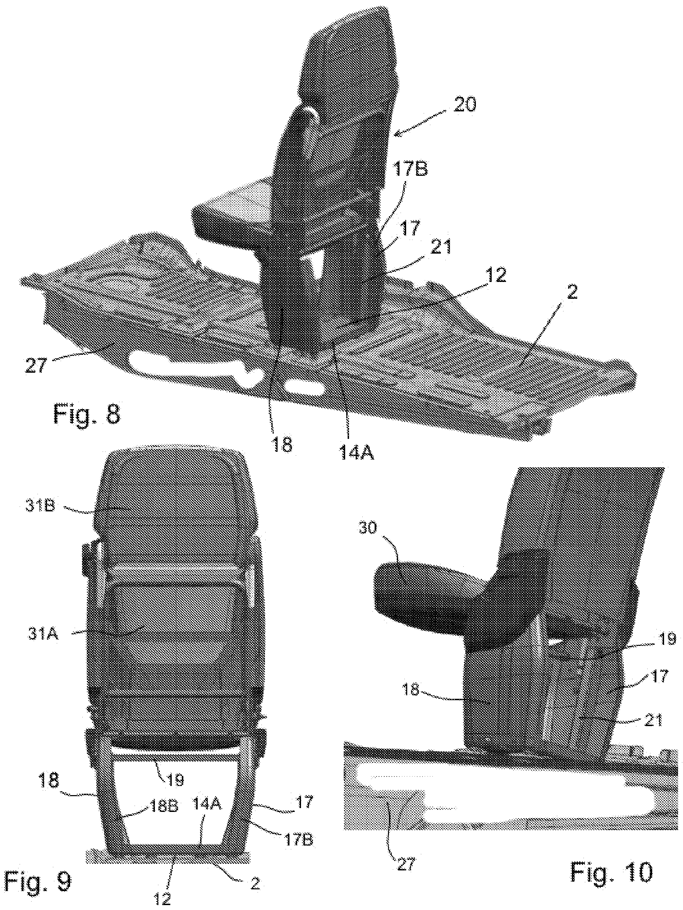

Fig. 8 schematically shows the embodiment of a co-driver chair support in a driver's cabin of a vehicle according to the invention as shown in Figure 6 mounted with a chair assembly in a perspective view from behind;
Fig. 9 schematically shows the embodiment of a co-driver chair support in a driver's cabin of a vehicle according to the invention as shown in Figure 6 mounted with a chair assembly in a rear view;
Fig. 10 schematically shows the embodiment of a co-driver chair support in a driver's cabin of a vehicle according to the invention as shown in Figure 6 mounted with a chair assembly in a perspective rear view from below;
Figs. 11 and 12 schematically show the embodiment of a co-driver chair support in a driver's cabin of a vehicle according to the invention as shown in Figure 6 detailing the connection of the chair assembly to the co-driver chair support in a perspective rear view;
Fig. 13 schematically shows the chair assembly of the embodiment shown in Figs. 11 and 12 in side view with the seat in a horizontal position; and
Fig. 14 schematically shows the chair assembly of the embodiment shown in Fig. 13 in side view with the seat in a vertical upwards position.

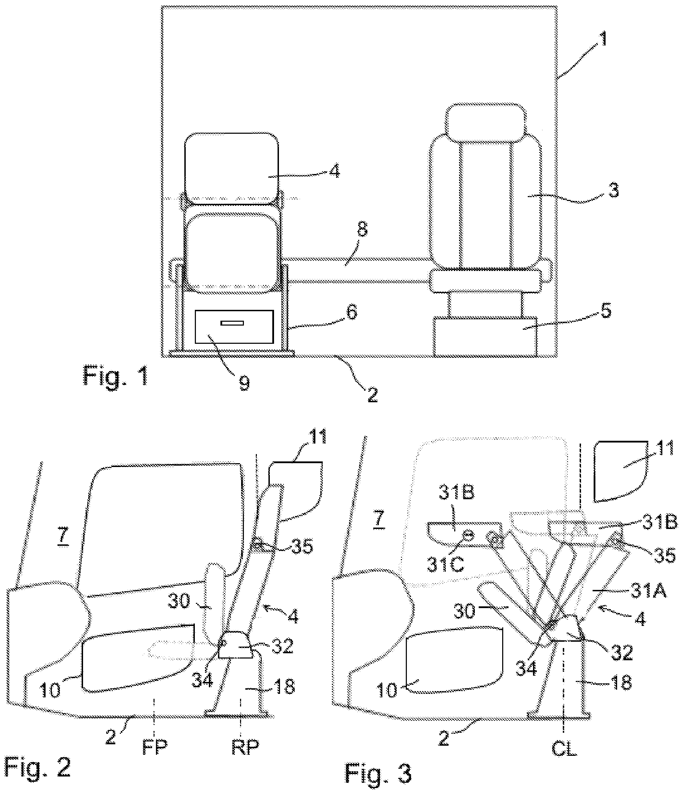

In Fig. 1 an embodiment of driver's cabin 1 of a vehicle, in particular a heavy goods vehicle, is schematically shown in front view. The driver's cabin 1 comprises a cabin floor 2 on which a driver chair 3 and a co-driver chair 4 are mounted. The driver chair 3 includes a driver chair support 5 which is embodied as a conventional box like chair support connecting the driver chair 3 to the cabin floor 2. The co-driver chair 4 includes a co-driver chair support 6 connecting the co-driver chair 4 to the cabin floor 2. The driver chair 3 is connected in a displaceable manner to the cabin floor 2 from a front position FP to a rear position RP. According to an embodiment of the invention the co-driver chair 4, however, is fixedly connected to the cabin floor 2 in a single position which is in line with the rear position RP of the driver chair 3, when seen in a direction transverse to the normal driving direction D of the vehicle.

The driver's cabin 1 comprises a bed platform 8 extending behind the co-driver chair 4 transverse to the normal driving direction D of the vehicle and a drawer or box storage 9 underneath the bed platform 8. The drawer or box storage 9 is accessible through the co-driver chair support 6 as will be described below.

As shown in the embodiment of Figures 2 and 3 the driver's cabin 1 is provided with a co-driver side door 7 having a transparent lower portion 10. The driver's cabin further comprises a rear quarter window 11.

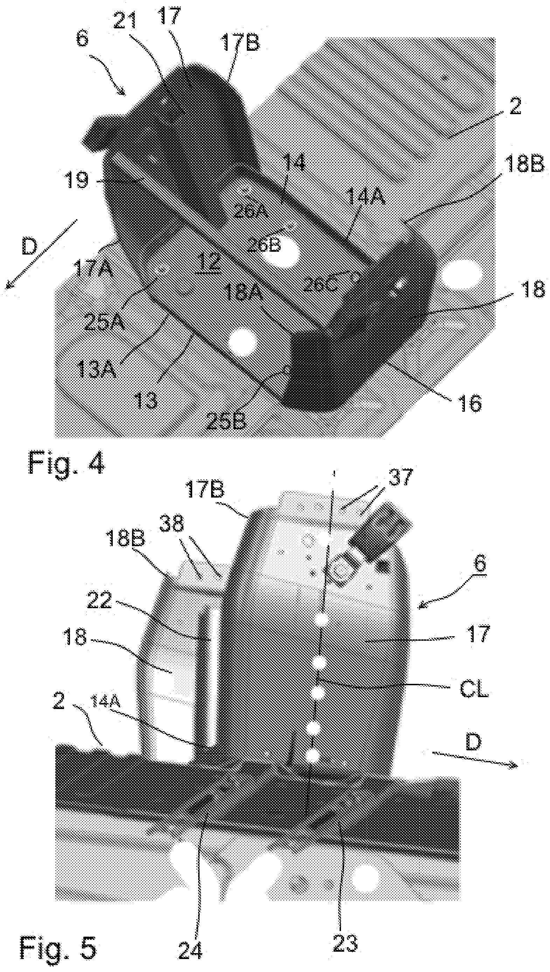

The co-driver chair support 6 will be described in more detail with reference to Figures 4 and 5. The co-driver chair support 6 of a driver's cabin according to the invention comprises a base plate 12 mounted to the cabin floor 2. The base plate 12 has a front edge 13, a rear edge 14 and side edges 15, 16. The side edges 15, 16 extend in a direction parallel to a normal driving direction D of the vehicle. The co-driver chair support 6 further comprises at each side edge 15, 16 of the base plate 12 a side support plate member 17, 18. Each side support plate member 17, 18 is connected at a lower end thereof to the respective side edge 15, 16 of the base plate 12 over a length of the side edge 15, 16 of the base plate 12. The side support plate members 17, 18 extend vertically upwards from the base plate 12. The side support plate members 17, 18 and the base plate 12 can be formed by separate components that are welded together or can be made as an integral unit. In this manner the co-driver chair support 6 forms a U-shaped portal like structure which not only can provide storage space under a seat of the co-driver chair 4 but also allows access to the drawer or box storage 9 underneath the bed platform 8 from a position in front of the co-driver chair 4.

The co-driver chair support 6 further comprises a horizontally extending strengthening beam 19 connected with its ends at upper ends of the side support plate members 17, 18 for interconnecting the side support plate members 17, 18 and providing additional rigidity to the co-driver chair support 6. A co-driver chair assembly 20 is attached to the free ends of the side support plate members 17, 18 as will be described below.

The co-driver chair support 6 further comprises two vertically extending strengthening beams 21, 22, in particular having a rectangular cross-section. Each vertically extending strengthening beam 21, 22 is connected to the base plate 12 and to a respective one of the side support plate members 17, 18.

In the embodiment shown in Figures 3 and 4 each side support plate member 17, 18 comprises a front edge and a rear edge, as seen in a normal driving direction D of the vehicle, comprising a strengthening rim 17A, 17B; 18A, 18B. In the embodiment shown in Figures 3 and 4 the front edge 13 and the rear edge 14 of the base plate 12 are also provided with strengthening rim 13A, 14A.

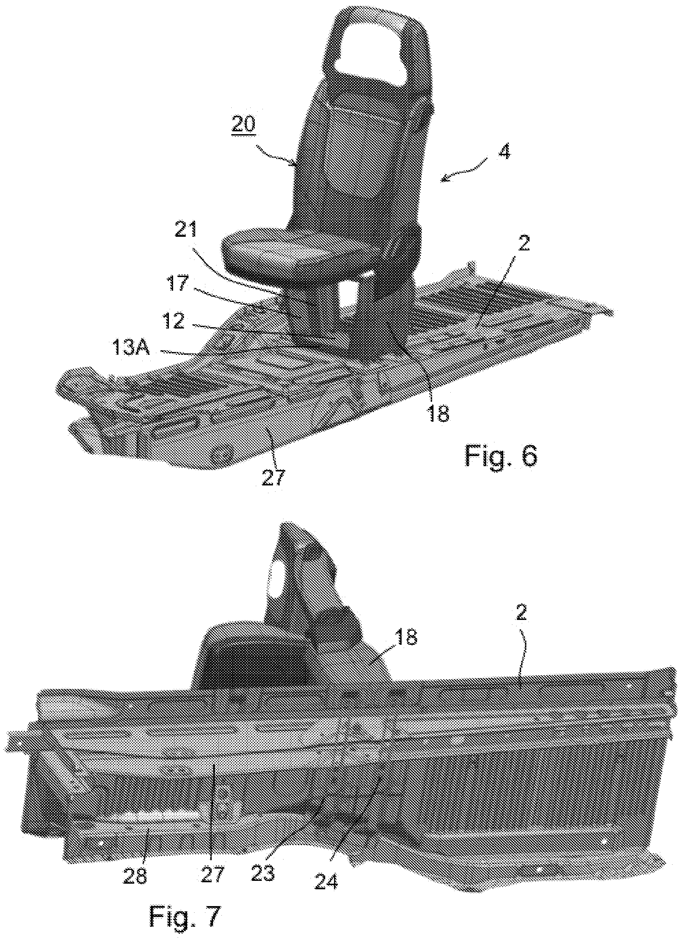

As shown in Figures 5 and 7 the cabin floor 2 is provided with a front reinforcement member 23 and a rear reinforcement member 24. The front and rear reinforcement members 23, 24 can be welded to or integrally formed with the cabin floor 2 as shown in Figure 5 or in case the cabin floor 2 comprises longitudinal girders 27, 28 (as shown in Figure 7) the front and rear reinforcement members 23, 24 can be welded to or integrally formed with the longitudinal girders 27, 28. The reinforcement members 23, 24 extending transverse to the normal driving direction D of the vehicle. The base plate 12 comprises two front base plate mounting holes 25A, 25B near its front edge 13 and four rear base plate mounting holes 26A-26D (of which three are visible in Figure 4) near its rear edge 14. The base plate 12 is mounted to the front reinforcement member 23 by front fastening means, such as crews, extending through the front base plate mounting holes 25A, 25B and to the rear reinforcement member 24 by rear fastening means, such as screws, extending through the rear base plate mounting holes 26A-26D.

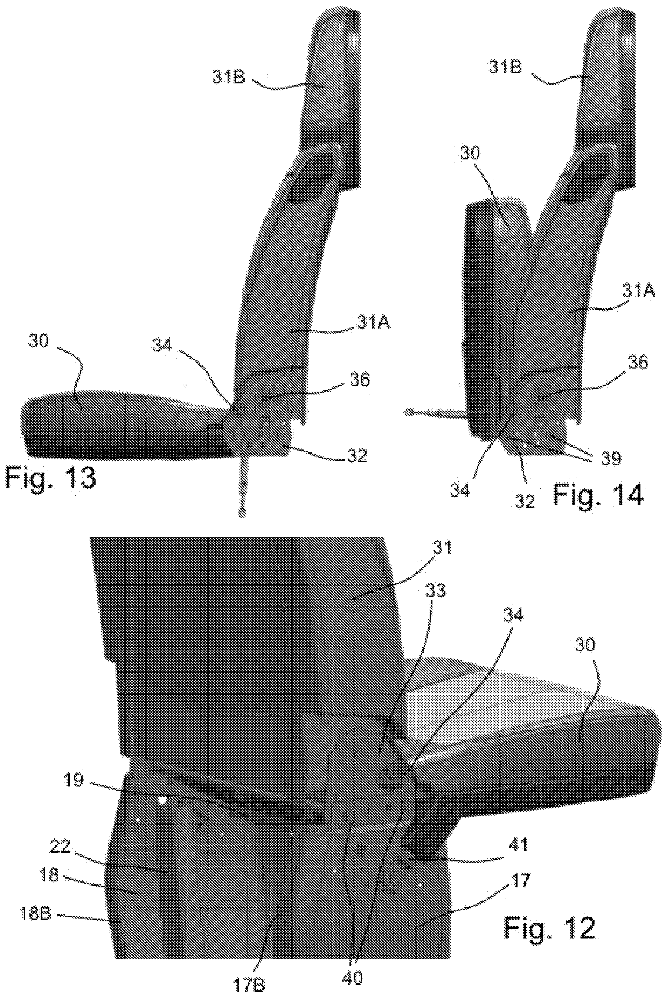

The co-driver chair assembly 20 will be described in more detail with reference to Figures 13 and 14. The co-driver chair assembly 20 is composed of a seat 30 and a backrest 31 which are connected to each other by assembly plates 32, 33. The seat 30 is connected in a hingeable manner to the assembly plates 32, 33 around a first hinge 34 and can be hinged or pivoted from a horizontal seating position as shown in Figure 13 into a vertical raised position as shown in Figure 14, and vice versa.

The backrest 31 of the chair assembly 20 comprises a backrest base portion 31A facing the seat 30 and a backrest upper part 31B adjoining the backrest base portion 31A, wherein the backrest upper part 31B is pivotally attached to the backrest base portion 31A about a horizontally aligned pivot axis 35 (see Figure 2 and 3) for pivoting the backrest upper part 31B in a horizontal position over the seat 30. The backrest upper part 31B is connected to the backrest base portion 31A by means of a parallelogram mechanism. As indicated in Figure 3, by means of the parallelogram mechanism the upper surface of the backrest upper part 31B when the backrest upper part is positioned in horizontal position maintains a horizontal position irrespective of the angular position of the backrest base portion 31A, which is in particular advantageous when the backrest 31 is connected in a hingeable manner to the assembly plates 32, 33 around a second hinge 36 which is positioned above the first hinge 34. In this manner the backrest upper part 31B in its horizontal position can e.g. provide the function as a table, which e.g. can be used by the driver while resting. In particular the table can be reached via the bed-platform 8 extending behind the co-driver chair 4. In the embodiment shown in Figure 3 the backrest upper part 31B is provided with an electrical socket 31C, so that electrical equipment can be connected to the electrical socket 31C while being placed on the table. Please note that the electrical socket can be formed by e.g. a USB-connection.

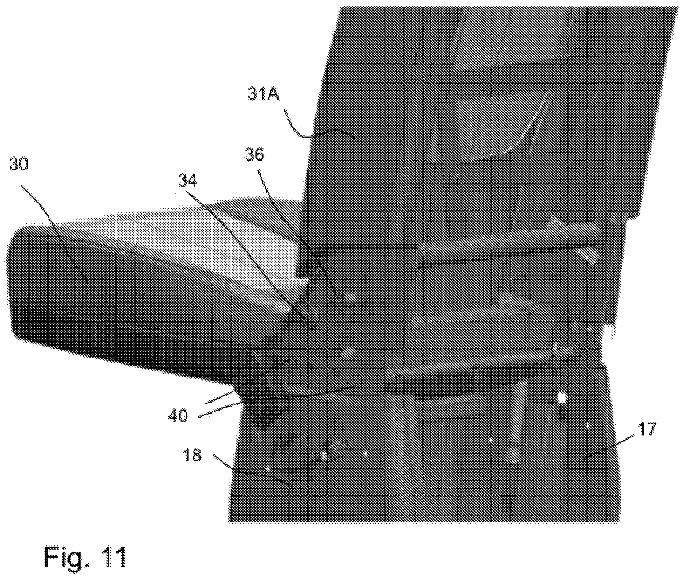

As e.g. visible in Figure 5 the free ends of the side support plate members 17, 18 comprise side support plate mounting holes 37, 38 and the assembly plates 32, 33 comprises corresponding assembly plate mounting holes 39 (see e.g. Figure 14) so that the chair assembly 20 can be attached to the co-driver chair support 6 by means of chair assembly fastening means, such as screws 40 (see Figures 11, 12), extending through the side support plate mounting holes 37, 38 and the corresponding assembly plate mounting holes 39. As is also e.g. visible in Figures 11 and 12, the seat belt plug buckle 41 is attached to the side support plates 17, 18 of the co-driver chair support 6. The hinge 34 around which the seat 30 is pivoted is arranged above the assembly plate mounting holes 39 in a front part of the assembly plates 32, 33.

The co-driver chair assembly 20 has a center of gravity which is positioned in front of a center line CL of the co-driver chair support 6, when seen in a normal driving direction D of the vehicle, so that the co-driver chair 4 can be positioned close to the bed platform 8 without the backrest 31 interfering with the bed platform 8.

## Claims

1. A driver's cabin (1) of a vehicle, in particular a heavy goods vehicle, the driver's cabin (1) comprising a cabin floor (2), a driver chair (3) and a co-driver chair (4), the driver chair (3) including a driver chair support (5) connecting the driver chair (3) to the cabin floor (2), the co-driver chair (4) including a co-driver chair support (6) connecting the co-driver chair (4) to the cabin floor (2), wherein the co-driver chair support (6) comprises a base plate (12) mounted to the cabin floor (2); the base plate (12) having a front edge (13), a rear edge (14) and side edges (15, 16), wherein said side edges (15, 16) extend in a direction parallel to a normal driving direction (D) of the vehicle; **characterized in that** the co-driver chair support (6) is formed by a U-shaped portal like structure comprising at each side edge (15, 16) of the base plate (12) a side support plate member, the U-shaped portal like structure providing a passage below the co-driver chair (4) for providing access from the front of the co-driver chair (4) to the back thereof, each side support plate member (17, 18) being connected at a lower end thereof to the respective side edge (15, 16) of the base plate (12) over a length of the side edge (15, 16) of the base plate (12) and extending vertically upwards from the base plate (12), **in that** the co-driver chair support (6) further comprises a horizontally extending strengthening beam (19) connected with its ends at upper ends of the side support plate members (17, 18) for interconnecting the side support plate members (17, 18), and **in that** a co-driver chair assembly (20) is attached to the free ends of the side support plate members (17, 18).

2. A driver's cabin (1) of a vehicle according to claim 1, wherein the co-driver chair support (6) further comprises two vertically extending strengthening beams (21, 22), each vertically extending strengthening beam (21, 22) connected to the base plate (12) and to one of the side support plate members (17, 18).

3. A driver's cabin (1) of a vehicle according to claim 1 or 2, wherein a side support plate member (17, 18) comprises a front edge and a rear edge, as seen in a normal driving direction (D) of the vehicle, and wherein at least one of the front edge (13) of the base plate (12), the rear edge (14) of the base plate (12), the front edge of the side support plate members (17, 18) and the rear edge of the side support plate members (17, 18) comprises a strengthening rim (17A, 17B; 18A, 18B).

4. A driver's cabin (1) of a vehicle according to any one of the preceding claims, wherein the cabin floor (2) is provided with a front reinforcement member (23) and a rear reinforcement member (24), the reinforcement members (23, 24) extending transverse to the normal driving direction (D) of the vehicle, wherein the base plate (12) comprises two front base plate mounting holes (25A, 25B) near its front edge (13) and four rear base plate mounting holes (26A-26D) near its rear edge (14), wherein the base plate (12) is mounted to the front reinforcement member (23) by front fastening means extending through the front base plate mounting holes (25A, 25B) and to the rear reinforcement member (24) by rear fastening means extending through the rear base plate mounting holes (26A-26D).

5. A driver's cabin (1) of a vehicle according to claim 4, wherein the cabin floor (2) comprises longitudinal girders (27, 28) and wherein the front and rear reinforcement members (23, 24) are welded to the longitudinal girders (27, 28).

6. A driver's cabin (1) of a vehicle according to any one of the preceding claims, wherein the driver chair (3) is connected in a displaceable manner to the cabin floor (2) from a front position (FP) to a rear position (RP), wherein the co-driver chair (4) is fixedly connected to the cabin floor (2) in a single position which is in line with the rear position (RP) of the driver chair (3), when seen in a direction transverse to the normal driving direction (D) of the vehicle.

7. A driver's cabin (1) of a vehicle according to any one of the preceding claims, wherein the co-driver chair assembly (20) has a center of gravity which is positioned in front of a center line (CL) of the co-driver chair support (6), when seen in a normal driving direction (D) of the vehicle.

8. A driver's cabin (1) of a vehicle according to any one of the preceding claims, wherein the co-driver chair assembly (20) is composed of a seat (30) and a backrest (31) which are connected to each other by assembly plates (32, 33), the seat (30) being hingeable connected to the assembly plates (32, 33) around a first hinge (34) from a horizontal seating position into a vertical raised position, and vice versa, wherein the free ends of the side support plate members (17, 18) comprise side support plate mounting holes (37, 38) and the assembly plates (32, 33) comprises corresponding assembly plate mounting holes (39), the chair assembly (20) being attached to the co-driver chair support (6) by means of chair assembly fastening means (40) extending through the side support plate mounting holes (37, 38) and the corresponding assembly plate mounting holes (39), and wherein the hinge (34) is arranged above the assembly plate mounting holes (39) in a front part of the assembly plates (32, 33).

9. A driver's cabin (1) of a vehicle according to claim 8, wherein the backrest (31) of the chair assembly (20) comprises a backrest base portion (31A) facing the seat (30) and a backrest upper part (31B) adjoining the backrest base portion (31A), the backrest upper part (31B) being pivotally attached to the backrest base portion (31A) about a horizontally aligned pivot axis (35) for pivoting the backrest upper part (31B) in a horizontal position over the seat (30).

10. A driver's cabin (1) of a vehicle according to claim 9, wherein the backrest upper part (31B) is connected to the backrest base portion (31A) by means of a parallelogram mechanism.

11. A driver's cabin (1) of a vehicle according to claim 9 or 10, wherein the backrest (31) is connected in a hingeable manner to the assembly plates (32, 33) around a second hinge (36), the second hinge (36) being positioned above the first hinge (34).

12. A driver's cabin (1) of a vehicle according to any one of the claims 8 to 11, wherein the backrest upper part (31B) is provided with an electrical socket (31C).

13. A driver's cabin (1) of a vehicle according to any one of the preceding claims, wherein the driver's cabin (1) comprises a bed platform (8) extending behind the co-driver chair (4) transverse to the normal driving direction (D) of the vehicle and a drawer or box storage (9) underneath the bed platform (8), the drawer or box storage (9) being accessible through the side support plate members (17, 18) of the co-driver chair support (6).

14. A driver's cabin (1) of a vehicle according to any one of the preceding claims, wherein the seat belt plug buckle (41) is attached to the side support plates (17, 18) of the co-driver chair support (6).

15. A driver's cabin (1) of a vehicle according to any one of the preceding claims, wherein the driver's cabin (1) is provided with a co-driver side door (7) having a transparent lower portion (10).

## Patentansprüche

1. Fahrerkabine (1) eines Fahrzeugs, insbesondere eines Lastkraftfahrzeugs, wobei die Fahrerkabine (1) einen Kabinenboden (2), einen Fahrersitz (3) und einen Beifahrersitz (4) aufweist, wobei der Fahrersitz (3) eine Fahrersitzhalterung (5), die den Fahrersitz (3) mit dem Kabinenboden (2) verbindet, aufweist, wobei der Beifahrersitz (4) eine Beifahrersitzhalterung (6) aufweist, die den Beifahrersitz (4) mit dem Kabinenboden (2) verbindet, wobei die Beifahrersitzhalterung (6) eine am Kabinenboden (2) befestigte Grundplatte (12) aufweist; wobei die Grundplatte (12) eine Vorderkante (13), eine Hinterkante (14) und Seitenkanten (15, 16) aufweist, wobei die besagten Seitenkanten (15, 16) in einer Richtung parallel zu einer normalen Fahrrichtung (D) des Fahrzeugs verlaufen;
**dadurch gekennzeichnet, dass** die Beifahrersitzhalterung (6) durch eine U-förmige portalartige Struktur gebildet wird, die an jeder Seitenkante (15, 16) der Grundplatte (12) ein Seitenträgerplattenelement aufweist, wobei die U-förmige portalartige Struktur einen Durchgang unterhalb des Beifahrersitzes (4) bildet, um einen Zugang von der Vorderseite des Beifahrersitzes (4) zu dessen Rückseite zu ermöglichen, wobei jedes Seitenträgerplattenelement (17, 18) an ihrem unteren Ende über eine Länge der Seitenkante (15, 16) der Grundplatte (12) mit der jeweiligen Seitenkante (15, 16) der Grundplatte (12) verbunden sind und sich von der Grundplatte (12) vertikal nach oben erstreckt, wobei die Beifahrersitzhalterung (6) ferner einen horizontal verlaufenden Verstärkungsbalken (19) aufweist, der mit seinen Enden an den oberen Enden der Seitenträgerplattenelemente (17, 18) verbunden ist, um die Seitenträgerplattenelemente (17, 18) miteinander zu verbinden, und wobei eine Beifahrersitzbaugruppe (20) an den freien Enden der Seitenträgerplattenelemente (17, 18) befestigt ist.

2. Fahrerkabine (1) eines Fahrzeugs nach Anspruch 1, wobei die Beifahrersitzhalterung (6) ferner zwei sich vertikal erstreckende Verstärkungsträger (21, 22) aufweist, wobei jeder sich vertikal erstreckende Verstärkungsträger (21, 22) mit der Grundplatte (12) und mit einem der Seitenträgerelemente (17, 18) verbunden ist.

3. Fahrerkabine (1) eines Fahrzeugs nach Anspruch 1 oder 2, wobei ein Seitenträgerelement (17, 18) eine Vorderkante und eine Hinterkante aufweist, gesehen in einer normalen Fahrtrichtung (D) des Fahrzeugs, und wobei mindestens eine der Vorderkante (13) der Grundplatte (12), der Hinterkante (14) der Grundplatte (12), der Vorderkante der Seitenträgerelemente (17, 18) und der Hinterkante der Seitenträgerelemente (17, 18) einen Verstärkungsrand (17A, 17B; 18A, 18B) aufweist.

4. Fahrerkabine (1) eines Fahrzeugs nach einem der vorhergehenden Ansprüche, wobei der Kabinenboden (2) mit einem vorderen Verstärkungselement (23) und einem hinteren Verstärkungselement (24) versehen ist, wobei sich die Verstärkungselemente (23, 24) quer zur normalen Fahrtrichtung (D) des Fahrzeugs erstrecken, wobei die Grundplatte (12) zwei vordere Grundplattenbefestigungslöcher (25A, 25B) in der Nähe ihrer Vorderkante (13) und vier hintere Grundplattenbefestigungslöcher (26A-26D) in der Nähe ihrer Hinterkante (14) aufweist, wobei die Grundplatte (12) an dem vorderen Verstärkungselement (23) durch vordere Befestigungsmittel, die sich durch die vorderen Grundplattenbefestigungslöcher (25A, 25B) erstrecken, und an dem hinteren Verstärkungselement (24) durch hintere Befestigungsmittel, die sich durch die hinteren Grundplattenbefestigungslöcher (26A-26D) erstrecken, befestigt ist.

5. Fahrerkabine (1) eines Fahrzeugs nach Anspruch 4, wobei der Kabinenboden (2) Längsträger (27, 28) aufweist und wobei die vorderen und hinteren Verstärkungselemente (23, 24) mit den Längsträgern (27, 28) verschweißt sind.

6. Fahrerkabine (1) eines Fahrzeugs nach einem der vorhergehenden Ansprüche, wobei der Fahrersitz (3) mit dem Kabinenboden (2) von einer vorderen Position (FP) zu einer hinteren Position (RP) verschiebbar verbunden ist, wobei der Beifahrersitz (4) mit dem Kabinenboden (2) in einer einzigen Position fest verbunden ist, die mit der hinteren Position (RP) des Fahrersitzes (3), in einer Richtung quer zur normalen Fahrtrichtung (D) des Fahrzeugs gesehen, ausgerichtet ist.

7. Fahrerkabine (1) eines Fahrzeugs nach einem der vorhergehenden Ansprüche, wobei die Beifahrersitzbaugruppe (20) einen Schwerpunkt aufweist, der in normaler Fahrtrichtung (D) des Fahrzeugs gesehen vor einer Mittellinie (CL) der Beifahrersitzhalterung (6) liegt.

8. Fahrerkabine (1) eines Fahrzeugs nach einem der vorstehenden Ansprüche, wobei die Beifahrersitzbaugrupe (20) aus einem Sitz (30) und einer Rückenlehne (31) besteht, die durch Baugruppenplatten (32, 33) miteinander verbunden sind, wobei der Sitz (30) um ein erstes Scharnier (34) aus einer horizontalen Sitzposition in eine vertikale angehobene Position und umgekehrt schwenkbar mit den Baugruppenplatten (32, 33) verbunden ist, wobei die freien Enden der Seitenträgerplattenelemente (17, 18) Seitenträgerplattenbefestigungslöcher (37, 38) aufweisen und die Baugruppenplatten (32, 33) entsprechende Baugruppenplattenbefestigungslöcher (39) aufweisen, wobei die Sitzbaugruppe (20) mittels Sitzbaugruppen-Befestigungsmitteln (40), die sich durch die Seitenträgerplattenbefestigungslöcher (37, 38) und die entsprechenden Baugruppenplattenbefestigungslöcher (39) erstrecken, an der Beifahrersitzhalterung (6) befestigt ist, und wobei das Scharnier (34) über den Baugruppenplattenbefestigungslöchern (39) in einem vorderen Teil der Baugruppenplatten (32, 33) angeordnet ist.

9. Fahrerkabine (1) eines Fahrzeugs nach Anspruch 8, wobei die Rückenlehne (31) der Sitzbaugruppe (20) einen dem Sitz (30) zugewandten Rückenlehnen-Basisabschnitt (31A) und ein an den Rückenlehnen-Basisabschnitt (31A) anschließendes Rückenlehnenoberteil (31B) aufweist, wobei das Rückenlehnenoberteil (31B) um eine horizontal ausgerichtete Schwenkachse (35) schwenkbar am Rückenlehnen-Basisabschnitt (31A) befestigt ist, um das Rückenlehnenoberteil (31B) in eine horizontale Position über den Sitz (30) zu schwenken.

10. Fahrerkabine (1) eines Fahrzeugs nach Anspruch 9, wobei das Rückenlehnenoberteil (31B) mit dem Rückenlehnen-Basisabschnitt (31A) mittels eines Parallelogrammmechanismus verbunden ist.

11. Fahrerkabine (1) eines Fahrzeugs nach Anspruch 9 oder 10, wobei die Rückenlehne (31) um ein zweites Scharnier (36) herum schwenkbar mit den Baugruppenplatten (32, 33) verbunden ist, wobei das zweite Scharnier (36) oberhalb des ersten Scharniers (34) angeordnet ist.

12. Fahrerkabine (1) eines Fahrzeugs nach einem der Ansprüche 8 bis 11, wobei das Rückenlehnenoberteil (31B) mit einer Steckdose (31C) versehen ist.

13. Fahrerkabine (1) eines Fahrzeugs nach einem der vorhergehenden Ansprüche, wobei die Fahrerkabine (1) eine Bettplattform (8), die sich hinter dem Beifahrersitz (4) quer zur normalen Fahrtrichtung (D) des Fahrzeugs erstreckt, und eine Schublade oder einen Kastenstauraum (9) unterhalb der Bettplattform (8) aufweist, wobei die Schublade oder der Kastenstauraum (9) durch die Seitenträgerplattenelemente (17, 18) der Beifahrersitzhalterung (6) zugänglich ist.

14. Fahrerkabine (1) eines Fahrzeugs nach einem der vorhergehenden Ansprüche, wobei das Gurtsteckschloss (41) an den Seitenträgerplatten (17, 18) der Beifahrersitzhalterung (6) befestigt ist.

15. Fahrerkabine (1) eines Fahrzeugs nach einem der vorhergehenden Ansprüche, wobei die Fahrerkabine (1) mit einer Tür (7) auf der Beifahrerseite versehen ist, die einen transparenten unteren Bereich (10) aufweist.

## Revendications

1. Cabine de conduite (1) d'un véhicule, en particulier un camion, la cabine de conduite (1) comprenant un plancher de cabine (2), un siège conducteur (3) et un siège de deuxième conducteur (4), le siège conducteur (3) comportant un support de siège conducteur (5) reliant le siège conducteur (3) au plancher de cabine (2), le siège de deuxième conducteur (4) comportant un support de siège de deuxième conducteur (6) reliant le siège de deuxième conducteur (4) au plancher de cabine (2), dans laquelle le support de siège de deuxième conducteur (6) comprend une plaque de base (12) montée sur le plancher de cabine (2) ; la plaque de base (12) ayant un bord avant (13), un bord arrière (14) et des bords latéraux (15, 16), dans laquelle lesdits bords latéraux (15, 16) s'étendent dans une direction parallèle à une direction de conduite normale (D) du véhicule ; **caractérisée en ce que** le support de siège de deuxième conducteur (6) est formé par une structure en forme de portail en U comprenant sur chaque bord latéral (15, 16) de la plaque de base (12) un élément plat de support latéral, la structure en forme de portail en U fournissant un passage sous le siège de deuxième conducteur (4) pour permettre l'accès à l'arrière du siège de deuxième conducteur (4) depuis l'avant de ce dernier, chaque élément plat de support latéral (17, 18) étant relié à une extrémité inférieure de celui-ci au bord latéral (15, 16) respectif de la plaque de base (12) sur une longueur du bord latéral (15, 16) de la plaque de base (12) et s'étendant verticalement vers le haut depuis la plaque de base (12), **en ce que** le support de siège de deuxième conducteur (6) comprend en outre une barre de renfort s'étendant horizontalement (19) connectée par ses extrémités aux extrémités supérieures des éléments plats de support latéral (17, 18) pour relier les éléments plats de support latéral (17, 18), et **en ce qu'**un ensemble de siège de deuxième conducteur (20) est attaché aux extrémités libres des éléments plats de support latéral (17, 18).

2. Cabine de conduite (1) d'un véhicule selon la revendication 1, dans laquelle le support de siège de deuxième conducteur (6) comprend en outre deux barres de renfort s'étendant verticalement (21, 22), chaque barre de renfort s'étendant verticalement (21, 22) étant connectée à la plaque de base (12) et à l'un des éléments plats de support latéral (17, 18).

3. Cabine de conduite (1) d'un véhicule selon la revendication 1 ou 2, dans laquelle un élément plat de support latéral (17, 18) comprend un bord avant et un bord arrière, vu dans une direction de conduite normale (D) du véhicule, et dans laquelle au moins un élément parmi le bord avant (13) de la plaque de base (12), le bord arrière (14) de la plaque de base (12), le bord avant des éléments plats de support latéral (17, 18) et le bord arrière des éléments plats de support latéral (17, 18) comprend une nervure de renfort (17A, 17B ; 18A, 18B).

4. Cabine de conduite (1) d'un véhicule selon l'une quelconque des revendications précédentes, dans laquelle le plancher de cabine (2) est pourvu d'un élément de renforcement avant (23) et d'un élément de renforcement arrière (24), les éléments de renforcement (23, 24) s'étendant transversalement à la direction de conduite normale (D) du véhicule, dans laquelle la plaque de base (12) comprend deux trous de montage de plaque de base avant (25A, 25B) près de son bord avant (13) et quatre trous de montage de plaque de base arrière (26A-26D) près de son bord arrière (14), dans laquelle la plaque de base (12) est montée sur l'élément de renforcement avant (23) à l'aide d'un moyen de fixation avant s'étendant dans les trous de montage de plaque de base avant (25A, 25B) et sur l'élément de renforcement arrière (24) à l'aide d'un moyen de fixation arrière s'étendant dans les trous de montage de plaque de base arrière (26A-26D).

5. Cabine de conduite (1) d'un véhicule selon la revendication 4, dans laquelle le plancher de cabine (2) comprend des longerons (27, 28) et dans laquelle les éléments de renforcement avant et arrière (23, 24) sont soudés aux longerons (27, 28).

6. Cabine de conduite (1) d'un véhicule selon l'une quelconque des revendications précédentes, dans laquelle le siège conducteur (3) est connecté de manière déplaçable au plancher de cabine (2) d'une position avant (FP) à une position arrière (RP), dans laquelle le siège de deuxième conducteur (4) est connecté de manière fixe au plancher de cabine (2) en une position simple qui est alignée avec la position arrière (RP) du siège conducteur (3), vu dans une direction transversale à la direction de conduite normale (D) du véhicule.

7. Cabine de conduite (1) d'un véhicule selon l'une quelconque des revendications précédentes, dans laquelle l'ensemble de siège de deuxième conducteur (20) a un centre de gravité qui est positionné devant un axe central (CL) du support de siège de deuxième conducteur (6), vu dans une direction de conduite normale (D) du véhicule.

8. Cabine de conduite (1) d'un véhicule selon l'une quelconque des revendications précédentes, dans laquelle l'ensemble de siège de deuxième conducteur (20) se compose d'une assise (30) et d'un dossier (31) qui sont reliés l'un à l'autre par des plaques d'assemblage (32, 33), l'assise (30) étant connectée de façon articulée aux plaques d'assemblage (32, 33) autour d'une première charnière (34) d'une position d'assise horizontale à une position redressée verticale, et vice versa, dans laquelle les extrémités libres des éléments plats de support latéral (17, 18) comprennent des trous de montage de supports latéraux (37, 38) et les plaques d'assemblage (32, 33) comprennent des trous de montage de plaques d'assemblage (39) correspondants, l'ensemble de siège (20) étant attaché au support de siège de deuxième conducteur (6) à l'aide d'un moyen de fixation d'ensemble de siège (40) s'étendant dans les trous de montage de supports latéraux (37, 38) et les trous de montage de plaques d'assemblage (39) correspondants, et dans laquelle la charnière (34) est placée au-dessus des trous de montage de plaques d'assemblage (39) dans une partie avant des plaques d'assemblage (32, 33).

9. Cabine de conduite (1) d'un véhicule selon la revendication 8, dans laquelle le dossier (31) de l'ensemble de siège (20) comprend une partie de base de dossier (31A) située en face de l'assise (30) et une partie supérieure de dossier (31B) attenante à la partie de base de dossier (31A), la partie supérieure de dossier (31B) étant attachée à pivotement à la partie de base de dossier (31A) autour d'un axe de pivotement aligné horizontalement (35) pour faire pivoter la partie supérieure de dossier (31B) dans une position horizontale sur l'assise (30).

10. Cabine de conduite (1) d'un véhicule selon la revendication 9, dans laquelle la partie supérieure de dossier (31B) est connectée à la partie de base de dossier (31A) à l'aide d'un mécanisme de parallélogramme.

11. Cabine de conduite (1) d'un véhicule selon la revendication 9 ou 10, dans laquelle le dossier (31) est connecté de façon articulée aux plaques d'assemblage (32, 33) autour d'une deuxième charnière (36), la deuxième charnière (36) étant placée au-dessus de la première charnière (34).

12. Cabine de conduite (1) d'un véhicule selon l'une quelconque des revendications 8 à 11, dans laquelle la partie supérieure de dossier (31B) est pourvue d'une prise électrique (31C).

13. Cabine de conduite (1) d'un véhicule selon l'une quelconque des revendications précédentes, dans laquelle la cabine de conduite (1) comprend une plateforme de lit (8) s'étendant derrière le siège de deuxième conducteur (4) transversalement à la direction de conduite normale (D) du véhicule et un tiroir ou bac de rangement (9) sous la plateforme de lit (8), le tiroir ou bac de rangement (9) étant accessible à travers les éléments plats de support latéral (17, 18) du support de siège de deuxième conducteur (6).

14. Cabine de conduite (1) d'un véhicule selon l'une quelconque des revendications précédentes, dans laquelle la boucle de ceinture de sécurité (41) est attachée aux éléments plats de support latéral (17, 18) du support de siège de deuxième conducteur (6).

15. Cabine de conduite (1) d'un véhicule selon l'une quelconque des revendications précédentes, dans laquelle la cabine de conduite (1) est pourvue d'une porte latérale de deuxième conducteur (7) comportant une partie inférieure transparente (10).
